# EUROPÄISCHE PATENTSCHRIFT

(11) **EP 0 584 100 B1**
(45) Veröffentlichungstag und Bekanntmachung des Hinweises auf die Patenterteilung: **21.02.1996**
(21) Anmeldenummer: 92908998.5
(22) Anmeldetag: 24.04.1992
(51) Int. Cl.: A47J 43/06, A47J 43/04, B01F 11/00

(54) **UNIVERSELLES KÜCHENGERÄT**
UNIVERSAL KITCHEN APPLIANCE
APPAREIL DE CUISINE UNIVERSEL

(30) Priorität: 27.04.1991 DE 4113862
(43) Veröffentlichungstag der Anmeldung: 02.03.1994
(73) Patentinhaber: GRELICH, Thomas, D-95349 Thurnau (DE)
(72) Erfinder: GRELICH, Thomas, D-95349 Thurnau (DE)
(74) Vertreter: Müller, Karl-Ernst, Dr.
(86) Internationale Anmeldenummer: DE9200339
(87) Internationale Veröffentlichungsnummer: WO9219139

(56) Entgegenhaltungen:
- CH-A- 655 896
- DE-C- 194 362
- FR-A- 327 650
- FR-A- 1 312 077
- FR-A- 1 584 144
- US-A- 2 483 472
- US-A- 3 186 020
- US-A- 4 146 333

## Beschreibung

Die Erfindung betrifft ein Küchengerät zum Bearbeiten und Verarbeiten von Nahrungsmitteln durch Hacken, Mischen, Rühren, Kneten, Pressen oder dergleichen oder zur Herstellung von Emulsionen aus Nahrungsmitteln mit einem von einem Motor angetriebenen Be- und/oder Verarbeitungswerkzeug und mit einem zugeordneten, als liegend angeordneter röhrenförmiger Kessel ausgebildeten Arbeitsraum, wobei das Werkzeug mittels einer Vorschubeinheit über eine in Längsrichtung des Kessels angeordnete Welle rotierend über die Länge des Kessels geführt ist und in seinem Durchmesser dem zugeordneten Innenmaß des Kessels entspricht.

Ein Küchengerät mit den vorgenannten gattungsgemäßen Merkmalen ist in der US-A-2 483 472 beschrieben; bei dieser Küchenmaschine ist der Antriebsmotor ortsfest angeordnet, und über eine aufwendige Konstruktion mittels einer auf der an die Abtriebswelle des Motors angeflanschten Welle längsverschieblich geführten Hülse ist zusätzlich zu der vom Motor vermittelten Drehbewegung des Werkzeuges auch dessen Längsvorschub über die Länge des röhrenförmigen Kessels als Arbeitsraum möglich. Das Ausführen der Vorschubbewegung erfolgt durch Handbetätigung eines Hebels, der in einer an der längsverschieblichen Hülse ausgebildeten Verzahnung eingreift.

Mit dem bekannten Küchengerät ist der Nachteil verbunden, daß mittels der Handbetätigung für die Vorschubbewegung nicht der erforderliche Andruck und die erforderliche Vorschubgeschwindigkeit aufgebracht werden können, die in Abstimmung mit der jeweils anzupassenden Drehzahl des Motors für die Drehung des Werkzeuges einen ausreichenden Arbeitserfolg gewährleisten; dies gilt insbesondere für die Herstellung von Emulsionen, bei der neben der einzuhaltenden Drehzahl des Werkzeuges auch eine entsprechende Vorschubgeschwindigkeit einzuhalten ist.

Der Erfindung liegt daher die Aufgabe zugrunde, bei einem Küchengerät mit den eingangs genannten Merkmalen die Einstellung und Ausführung des Vorschubes zu verbessern und dadurch die Arbeitsfähigkeit des Küchengerätes zu vergrößern.

Die Lösung dieser Aufgabe ergibt sich einschließlich vorteilhafter Ausgestaltungen und Weiterbildungen der Erfindung aus dem Inhalt der Patentansprüche, welche dieser Beschreibung nachgestellt sind.

Gemäß der Lösung ist zur Bewirkung des gewünschten Vorschubes der Antriebsmotor für die Welle als Trägerin des Werkzeuges selbst auf einem Schlitten angeordnet, der seinerseits über eine Spindel und einen zugeordneten Elektromotor in Längsrichtung des Kessels verschiebbar ist, so daß die Welle einschließlich Antriebsmotor in der Längsachse des Kessels verschoben wird und so den erforderlichen Vorschub für das an der Welle sitzende Werkzeug bewirkt.

Damit ist der Vorteil verbunden, daß aufgrund der zweckmäßigen Konstruktion der Vorschub ebenfalls motorisch ausgeführt wird, so daß die Vorschubgeschwindigkeit und die Drehzahl des auf dem Schlitten angeordneten Elektromotors bei getrennter Regelung genau aufeinander abgestimmt werden können. Somit ist in vorteilhafter Weise eine individuelle Arbeitsweise mit dem Küchengerät einstellbar; so kann unterschiedlich grob gehackt, geschrotet oder gemischt werden. Beispielsweise können bei der Herstellung von Marmelade oder Eis die Größe der Fruchtstücke beeinflußt und bei der Herstellung von Fruchtsäften kann der Anteil der Fruchtmasse im Saft durch feineres oder groberes Zerkleinern der Fruchtmasse bestimmt werden. Dieses ist in vorteilhafter Weise dadurch gegeben, daß das Werkzeug den Kessel rotierend durchläuft und somit die in dem Kessel befindliche zu verarbeitende Masse jeweils nur mit einer vorbestimmten Beeinflussung erfaßt, weil aufgrund des Vorschubes des Werkzeuges eine zu lange Verweildauer der Masse in dem schon berbeiteten Bereich des Kessels ausgeschlossen ist.

Ein weiterer Vorteil ergibt sich daraus, daß mit dem einheitlichen Küchengerät nun sehr unterschiedliche Be- und Verarbeitungsvorgaben zu bewältigen sind. Dabei können in vorteilhafter Weise auch mehrere Verarbeitungsvorgänge hintereinander durchgeführt werden, weil ein problemloser Wechsel der Verarbeitungswerkzeuge trotz der gefüllten Maschine bei Unterbrechung des Arbeitsvorganges möglich ist. Durch eine entsprechende Anpassung der Werkzeuge kann dabei den unterschiedlichsten Bedürfnissen der Nahrungsmittelver- und bearbeitung Rechnung getragen werden, wobei insbesondere die Vorbereitung von Zutaten für die Herstellung von Brot und Wurst sowie die Herstellung der vorgenannten Nahrungsmittel an sich erleichtert sind. Als besonderer Vorteil ist die leichte Reinigungsmöglichkeit bei dem erfindungsgemäßen Küchengerät zu nennen, weil durch das Einfüllen einer Reinigungsemulsion in den Kessel und einen Arbeitsgang des Küchengerätes mit den benutzten Werkzeugen sowie einem besonderen Reinigungswerkzeug eine vollständige Reinigung des Küchengerätes durchführbar ist. Aus diesem Grund sind selbst bei Verarbeitung von verschiedensten Grundsubstanzen nacheinander keine aufwendigen Zerlegungsarbeiten, Reinigen und Zusammenbau des Küchengerätes erforderlich.

Nach einem Ausführungsbeispiel der Erfindung ist zur Verwirklichung des Antriebes für das Werkzeug in der hinteren Stirnwand des Kessels ein mittels einer Dichtung abgedichteter Durchtritt für die Welle angeordnet, wobei das Werkzeug an der Spitze der Welle festlegbar ist. Eine solche Lösung ist - allerdings für einen anderen Anwendungszweck im Bereich des Mischens und/oder Plastifizierens von Kautschuk oder Kunststoffen - bereits aus der CH-A-655 896 grundsätzlich bekannt.

Eine weitere Ausführungsform der Erfindung besteht in dem Vorschlag, eine Abfolge mehrerer hintereinander geschalteter Werkzeuge an der Welle zu befestigen, womit insbesondere bei Kombination mit einem Reinigungswerkzeug der Arbeitserfolg des Küchengerätes insgesamt verbesserbar ist. Eine solche Anordnung mehrerer Werkzeuge auf der Welle ist bei einem Küchengerät bereits in der FR-A-1 312 077 beschrieben.

Bei einem zweckmäßigen Ausführungsbeispiel der Erfindung ist die vordere Stirnwand des Kessels als Abfülltrichter ausgebildet, was für bestimmte Anwendungszwecke der Maschine von großem Vorteil ist. Dabei weist die Innenseite der vorderen Stirnwand eine Passung zur Aufnahme von Funktionsscheiben auf, die beispielsweise als Verschlußscheibe, als Siebscheibe oder als Scheibe mit wenigstens einer formgebenden Öffnung ausgebildet sein können, um unterschiedlichen Anforderungen an Arbeitsgänge des Küchengerätes gerecht zu werden. Zweckmäßig kann die vordere Stirnwand eine Ablaßschraube aufweisen, um in dem Kessel anstehende Reinigungsflüssigkeit oder sonstige Flüssigkeitsreste abzulassen.

Um eine Zugänglichkeit zu dem Kessel als Arbeitsraum zu gewährleisten, ist nach einem Ausführungsbeispiel der Erfindung die Wandung des Kessels über dessen Länge in seinem oberen Bereich als schwenkbare Klappe ausgebildet, die mittels einer Dichtung und eines Verschlusses dicht verschließbar ist.

Nach einem besonderen Ausführungsbeispiel der Erfindung kann, insbesondere im Hinblick auf die Herstellung von Eis, die Wandung des Kessels mit einer Kühlvorrichtung versehen sein.

Ausführungsbeispiele der Erfindung befassen sich insbesondere mit der Ausbildung der auf die Welle aufsetzbaren Werkzeuge. So kann das Werkzeug als ein mit mehreren Messerflügeln versehenes Messer ausgebildet sein, dessen Messerflügel in Längsrichtung des Kessels versetzt in verschiedenen Schneidebenen stehen.

Das Werkzeug kann als Flügelmischer ausgebildet sein, bei welchem zwei Flügel einander gegenüberstehend angeordnet sind, die an jeweils einer Flügelkante über eine Abwinklung von beispielsweise 20 Grad verfügen.

Das Werkzeug kann als ein Emulsionsmischer mit einer mittleren Aluminiumscheibe und einer diese umgebenden äußeren Drahtspirale ausgebildet sein, wobei der Gesamtdurchmesser des Emulsionsmischers dem Innenmaß des Kessels entspricht.

Das Werkzeug kann als eine vorzugsweise aus einer Aluminiumscheibe bestehenden Preßplatte ausgebildet sein, in deren Außenumfang eine Ringdichtung eingelassen ist.

Das Werkzeug kann aus einem Käseschneider bestehen, der aus einem Aluminiumreifen besteht, welcher mit einem Geflecht aus V2A-Draht besetzt ist, dessen Drahtabstand mindestens 4 mm beträgt.

Das Werkzeug kann als ein Reiniger ausgebildet sein, welcher zwei einander gegenüberliegende Flügel aufweist, wobei auf den Flügelenden sowie auf der Vorder- und Rückseite ein Besatz aus Gummilamellen angeordnet ist.

In der Zeichnung sind Ausführungsbeispiele der Erfindung wiedergegeben, welche nachstehend beschrieben sind. Es zeigen:
- Fig. 1: ein Küchengerät in Seitenansicht,
- Fig. 2: den Kessel des Küchengerätes in einer vergrößerten Darstellung,
- Fig. 3: den Gegenstand der Figur 2 mit Werkzeug und Antrieb dafür,
- Fig. 4: die Vorschubeinheit für das Werkzeug,
- Fig. 5: die hintere Stirnseite des Kessels in einer vergrößerten Darstellung,
- Fig. 6: die vordere Stirnseite des Kessels in einer vergrößerten Darstellung,
- Fig. 7: die Kesselwandung in einem Ausschnitt,
- Fig. 8a, b: ein als Messer ausgebildetes Werkzeug,
- Fig. 9: ein als Emulsionsmischer ausgebildetes Werkzeug,
- Fig. 10: ein als Käseschneider ausgebildetes Werkzeug,
- Fig. 11: ein als Reiniger ausgebildetes Werkzeug.

In einem gemeinsamen Gehäuse 10 ist ein liegend angeordneter röhrenförmiger Kessel 11 mit einer Antriebseinheit 12 für ein in dem Kessel bewegliches Werkzeug und mit einer Vorschubeinheit 13 angeordnet; das Gehäuse 10 hat ein Bedienertableau 14 mit Funktionswahl sowie -überwachung, ferner nicht weiter dargestellte elektrische Anschlüsse; zur Ergänzung der Bedienung ist ein Fußschalter 16 vorgesehen.

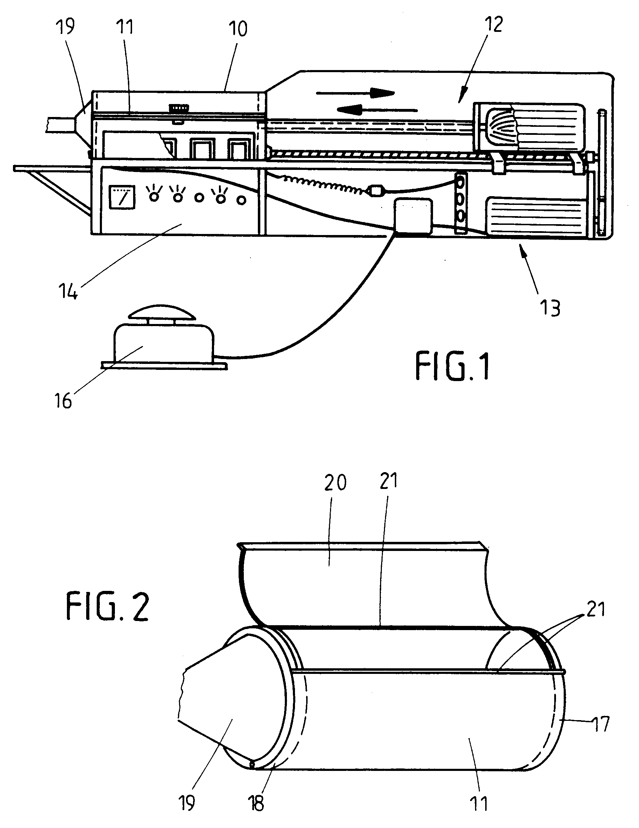

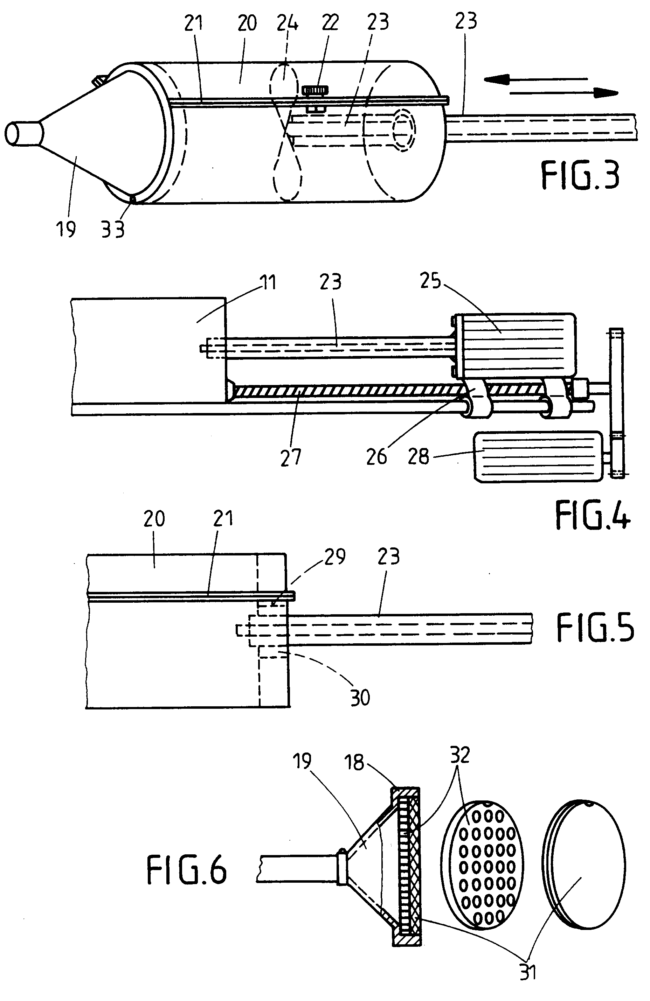

Der aus Figur 2 im einzelnen ersichtliche Kessel 11 hat eine hintere Stirnwand 17 und eine vordere Stirnwand 18, welche in einen Abfülltrichter 19 übergeht. Im oberen Bereich des Kessels 11 ist die Wandung als Klappe 20 ausgebildet, die hochschwenkbar eingerichtet ist und einen guten Zugang zu dem Inneren des Kessels 11 als Arbeitsraum ermöglicht. Eine umlaufende Dichtung 21 sorgt für eine Abdichtung des Arbeitsraumes bei geschlossener Klappe 20, und mittels eines Verschlusses 22 (Figur 3) ist der Kessel 11 zu verschließen.

Die Funktion des Küchengerätes ergibt sich näher aus den Figuren 3 und 4; in der Längsachse des Kessels 11 ist in diesem eine Welle 23 angeordnet, an deren vorderem Ende ein Werkzeug 24 sitzt, welches über die Welle 23 in Drehung zu versetzen ist. Die Welle 23 ist an ihrem hinteren, aus dem Kessel 11 hinausragenden Ende an einen Elektromotor 25 gekoppelt, der vorzugsweise stufenlos regelbar ist. Zur Erzeugung des erforderlichen Vorschubes für das Werkzeug 24 sitzt der Antriebsmotor 25 auf einem Schlitten 26, der längs einer ortsfesten und mit dem Kessel 11 verbundenen Spindel 27 bewegbar ist. Die Drehung der Spindel 27 wird über einen unterhalb der Spindel vorgesehenen Elektromotor 28 bewirkt. Schlitten 26 mit Spindel 27 und Elektromotor 28 bilden dabei die Vorschubeinheit 13.

Aus den Figuren 5 und 6 ergeben sich Einzelheiten bezüglich der Ausbildung des Kessels. Aus Figur 5 ergibt sich, daß die hintere Stirnwand 17 einen Durchtritt 29 mit einer Dichtung 30 für die Welle 23 aufweist. Entsprechend Figur 6 hat die vordere Stirnwand 18 mit daran anschließendem Trichter 19 an der Innenseite des Kessels 11 eine Passung für Funktionsscheiben, die nach dem gezeigten Ausführungsbeispiel als Verschlußscheibe 31 beziehungsweise Siebscheibe 32 ausgebildet sein können. An der vorderen Stirnseite 18 ist ferner eine Ablaufscheibe 33 angeordnet.

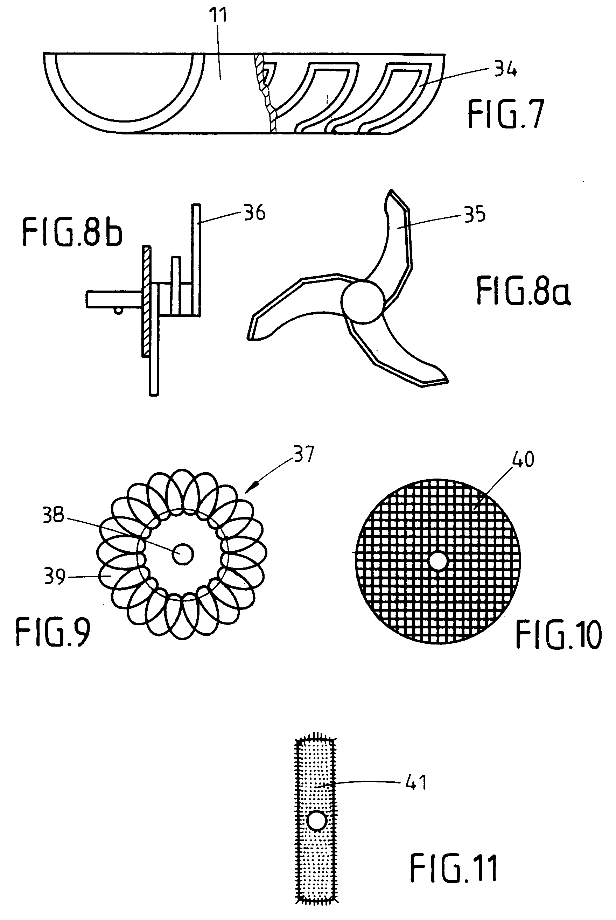

Aus Figur 7 ist eine Ausführungsform des Kessels 11 zu entnehmen, bei welchem an der feststehenden Außenwandung des Kessels 11 Kühlschlangen 34 angeordnet sind, die bei entsprechender Isolierung der Kesselwandung auch die Erzeugung von Speiseeis in dem Kessel 11 ermöglichen.

In den Figuren 8 bis 11 sind Werkzeuge dargestellt, die in besonderer Eignung an das erfindungsgemäße Küchengerät angepaßt sind. Aus den Figuren 8a und b ergibt sich ein Messer 35 mit drei Messerflügeln 36, die in Längsachse des Kessels 11 beziehungsweise in Richtung der Welle 23 versetzt zueinander in verschiedenen Schneidebenen angeordnet sind. Gemeinsam mit dem axialen Vorschub des Messers durch den Kessel 11 ergibt sich eine besonders gute Zerkleinerungswirkung.

Aus Figur 9 ist ein Emulsionsmischer 37 zu entnehmen, der aus einer zentralen Scheibe 38 besteht, die von einer Drahtspirale 39 umgeben ist; es versteht sich, daß der Gesamtdurchmesser von Scheibe 38 mit Drahtspirale 39 dem Innenmaß des Kessels 11 zu entsprechen hat. Mit einem derartigen Werkzeug lassen sich Emulsionen in besonders vorteilhafter Weise herstellen, weil die zentrale Scheibe 38 einen Druck auf den in dem Kessel 11 anstehenden Vorrat an Nahrungsmitteln ausübt, wobei eine Feinzerkleinerung und Durchmischung am äußeren Umfang mittels der Drahtspirale 39 erfolgt.

Aus Figur 10 ergibt sich die Ausbildung des Werkzeuges als sogenannter Käseschneider 40, der im wesentlichen aus einem Drahtgeflecht besteht und ohne Drehung nur über den Vorschub durch den Kessel 11 bewegbar ist.

Aus Figur 11 ergibt sich ein vorteilhaftes Reinigungswerkzeug 41, welches zwei einander gegenüberliegende Flügel aufweist; die Flügel sind an ihren Enden sowie an ihrer Vorder- und Rückseite mit Gummilamellen besetzt.

Weiterhin sind weitere Formen von Werkzeugen einzusetzen, so ein Flügelmischer mit zwei einander gegenüberstehenden Flügeln, deren Flügelkanten beispielsweise um 20 Grad abgewinkelt sind; weiter kann eine aus einer Aluminiumscheibe bestehende Preßplatte eingesetzt werden, in deren Außenumfang eine O-Ring-Dichtung eingelassen ist, wobei der Gesamtdurchmesser der Preßplatte dem Innenmaß des Kessels 11 entspricht. Ein derartiges Werkzeug wird ohne Rotation nur über die Vorschubeinheit 13 längs des Innenraumes des Kessels 11 gedrückt, wobei ausgepreßte Bestandteile insbesondere über den Abfülltrichter 19 abgezogen werden können.

Schließlich seien einige besonders vorteilhafte Anwendungsbeispiele für das erfindungsgemäße Küchengerät genannt:
1. Emulgieren von Wurstteig für Brüh- oder Bratwurst, Majonaise, Ketchup oder Creme aus pflanzlichen Stoffen, wobei Eiweißzellen oder Fettzellen aufgeschlossen werden müssen und wobei konstante Temperatur und eine hohe Zerteilfähigkeit benötigt werden, da die Zellen aufgeschlossen werden müssen, damit sie eine Bindung mit Wasser eingehen können.
2. Hacken von Fleisch, weil hier eine gleichmäßige Würfelung erzielt werden kann, ohne daß Teile zerquetscht oder Brei gemacht werden.
3. Schroten, weil eine Zerkleinerung gewährleistet ist, ohne einen zu hohen Mehlanteil zu bekommen.
4. Mischen, weil eine gleichmäßige Vermischung gegeben ist, was auch bei verschiedenen Konsistenzen des Mischgutes zu gewährleisten ist.
5. Rühren, da hier auch die unterschiedlichsten Zusammensetzungen gleichmäßig verrührt werden.
6. Kneten, weil auch schwer vermischbare Grundstoffe vermischt und zu einer zusammenhängenden Masse verknetet werden.
7. Formen, weil über den Vorschub des Werkzeuges ohne Drehung der erforderliche Druck ausübbar ist, um den Teig durch die formgebende Öffnung insbesondere in eine in der vorderen Stirnwand eingesetzte Scheibe zu pressen.
8. Pressen, wobei der erforderliche Druck über den Vorschub des Werkzeuges einstellbar ist und die ausgepreßte Flüssigkeit über den Abfülltrichter abziehbar ist.
9. Abfüllen, da der an der vorderen Stirnwand vorgesehene Abfülltrichter eine Abfüllung des Erzeugnisses unmittelbar in geeignete Behältnisse ohne ein vorheriges Umfüllen erlaubt.
10. Reinigen, da die Maschine keiner Zerlegung und Reinigung der Einzelteile bedarf, sondern nach einem Reinigungsdurchgang für die nächste Verarbeitung zur Verfügung steht.

Die in der vorstehenden Beschreibung, den Patentansprüchen, der Zusammenfassung und der Zeichnung offenbarten Merkmale des Gegenstandes dieser Unterlagen können einzeln als auch in beliebigen Kombinationen untereinander für die Verwirklichung der Erfindung in ihren verschiedenen Ausführungsformen wesentlich sein.

## Patentansprüche

1. Küchengerät zum Bearbeiten und Verarbeiten von Nahrungsmitteln durch Hacken, Mischen, Rühren, Kneten, Pressen oder dergleichen oder zur Herstellung von Emulsionen aus Nahrungsmitteln mit einem von einem Motor (25) angetriebenen Be- und/oder Verarbeitungswerkzeug (24) und mit einem zugeordneten, als liegend angeordneter röhrenförmiger Kessel (11) ausgebildeten Arbeitsraum, wobei das Werkzeug (24) mittels einer Vorschubeinheit (13) über eine in Längsrichtung des Kessels (11) angeordnete Welle (23) rotierend über die Länge des Kessels (11) geführt ist und in seinem Durchmesser dem zugeordneten Innenmaß des Kessels (11) entspricht, dadurch gekennzeichnet, daß als Vorschubeinheit (13) ein in Längsrichtung des Kessels (11) an einer ortsfesten Spindel (27) verfahrbarer und von einem Elektromotor (28) angetriebener Schlitten (26) vorgesehen ist, auf welchem der Antriebsmotor (25) für die Welle (23) angeordnet ist.

2. Küchengerät nach Anspruch 1, dadurch gekennzeichnet, daß in der hinteren Stirnwand (17) des Kessels (11) ein mittels einer Dichtung (30) abgedichteter Durchtritt (29) für die Welle (23) angeordnet ist und daß das Werkzeug (24) auf der inneren Spitze der Welle (23) festlegbar ist.

3. Küchengerät nach Anspruch 2, dadurch gekennzeichnet, daß eine Abfolge mehrerer, hintereinandergeschalteter Werkzeuge (24) auf der Welle (23) anzuordnen ist.

4. Küchengerät nach einem der Ansprüche 1 bis 3, dadurch gekennzeichnet, daß die vordere Stirnwand (18) des Kessels (11) als Abfülltrichter (19) ausgebildet ist.

5. Küchengerät nach Anspruch 4, dadurch gekennzeichnet, daß die vordere Stirnwand (18) des Kessels (11) eine innere Passung zur Aufnahme von Funktionsscheiben (31, 32) aufweist.

6. Küchengerät nach Anspruch 5, dadurch gekennzeichnet, daß die Funktionsscheibe als Verschlußscheibe (31) ausgebildet ist.

7. Küchengerät nach Anspruch 5, dadurch gekennzeichnet, daß die Funktionsscheibe als Siebscheibe (32) ausgebildet ist.

8. Küchengerät nach Anspruch 5, dadurch gekennzeichnet, daß die Funktionsscheibe wenigstens eine formgebende Öffnung aufweist.

9. Küchengerät nach einem der Ansprüche 4 bis 8, dadurch gekennzeichnet, daß die vordere Stirnwand (18) eine Ablaßschraube (33) aufweist.

10. Küchengerät nach einem der Ansprüche 1 bis 9, dadurch gekennzeichnet, daß die Wandung des Kessels (11) über dessen Länge in seinem oberen Bereich als schwenkbare Klappe (20) ausgebildet ist, die mittels einer Dichtung (21) und eines Verschlusses (22) dicht verschließbar ist.

11. Küchengerät nach einem der Ansprüche 1 bis 10, dadurch gekennzeichnet, daß die Wandung des Kessels (11) mit einer Kühlvorrichtung (34) versehen ist.

12. Küchengerät nach einem der Ansprüche 1 bis 11, dadurch gekennzeichnet, daß das auf die Welle (23) aufzusetzende Werkzeug (24) als ein Messer (35) mit mehreren Messerflügeln (36) ausgebildet ist, dessen Messerflügel (36) in Längsrichtung der Welle (23) versetzt in verschiedenen Schneidebenen stehen.

13. Küchengerät nach einem der Ansprüche 1 bis 11, dadurch gekennzeichnet, daß das auf die Welle (23) aufzusetzende Werkzeug als ein Flügelmischer mit zwei einander gegenüberstehenden Flügeln ausgebildet ist.

14. Küchengerät nach einem der Ansprüche 1 bis 11, dadurch gekennzeichnet, daß das auf die Welle (23) aufzusetzende Werkzeug als Emulsionsmischer (37) mit einer zentralen Scheibe (38) und einer die Scheibe (38) umgebenden Drahtspirale (39) ausgebildet ist, dessen Gesamtdurchmesser dem Innenmaß des Kessels (11) entspricht.

15. Küchengerät nach einem der Ansprüche 1 bis 11, dadurch gekennzeichnet, daß das auf die Welle (23) aufzusetzende Werkzeug als scheibenförmige Preßplatte mit einer auf dem äußeren Umfang angeordneten Ringdichtung ausgebildet ist.

16. Küchengerät nach einem der Ansprüche 1 bis 11, dadurch gekennzeichnet, daß das auf die Welle (23) aufzusetzende Werkzeug als Schneidwerkzeug mit einem Drahtgeflecht (40) ausgebildet ist.

17. Küchengerät nach einem der Ansprüche 1 bis 11, dadurch gekennzeichnet, daß das auf die Welle (23) aufzusetzende Werkzeug als Reinigungswerkzeug (41) mit zwei einander gegenüberliegenden Flügeln ausgebildet ist, wobei die Flügel auf ihrer Vorder- und Rückseite sowie an den Flügelenden mit Gummilamellen besetzt sind.

18. Küchengerät nach einem der Ansprüche 1 bis 17, dadurch gekennzeichnet, daß Kessel (11), Antriebseinheit (12) und Vorschubeinheit (13) in einem gemeinsamen Gehäuse (10) angeordnet sind.

## Claims

1. Kitchen appliance for processing food by chopping, mixing, stirring, kneading, pressing etc. or for manufacturing emulsions from food having a processing tool (24) driven by a motor (25) and having a respective working chamber, being in the form of a horizontally arranged tubular vessel (11) wherein said tool (24) is guided in rotation over the length of the vessel (11) with an advancing unit (13) along a shaft (23) arranged in the longitudinal direction of the vessel (11) and with its diameter corresponds to the respective inner dimension of the vessel (11), characterized in that the advancing unit (13) is in the form of a slide (26) that is slidable in the longitudinal direction of the vessel (11) on a stationary spindle (27) and is driven by an electric motor (28), whereby on the slide (26) the drive motor (25) for the shaft (23) is arranged.

2. Kitchen appliance according to claim 1, characterized in that the rear wall (17) of the vessel (11) has a throughbore (29) which is sealed by a seal (30) for the shaft (23) and that the tool (24) is fixedly connectable to the inner tip of the shaft (23).

3. Kitchen appliance according to claim 2, characterized in that a sequence of a plurality of tools (24) can be arranged one after another on the shaft (23).

4. Kitchen appliance according to one of the claims 1 through 3, characterized in that the forward wall (18) of the vessel (11) is in the form of a discharge funnel (19).

5. Kitchen appliance according to claim 4, characterized in that the forward wall (18) of the vessel (11) has an inner fitting for receiving processing disks (31, 32).

6. Kitchen appliance according to claim 5, characterized in that the processing disk is in the form of a closure plate (31).

7. Kitchen appliance according to claim 5, characterized in that the processing disk is a perforated disk (32).

8. Kitchen appliance according to claim 5, characterized in that the processing disk has at least one opening for shaping.

9. Kitchen appliance according to one of the claims 4 to 8, characterized in that the forward wall (18) has a discharge screw (33).

10. Kitchen appliance according to one of the claims 1 to 9, characterized in that the wall of the vessel (11) at its upper portion over its length has a pivotable closure (20) which is tightly closable with a seal (21) and a lock (22).

11. Kitchen appliance according to one of the claims 1 to 10, characterized in that the wall of the vessel (11) is provided with a cooling device (34).

12. Kitchen appliance according to one of the claims 1 to 11, characterized in that the tool (24) to be connected to the shaft (23) is a knife (35) with a plurality of knife blades (36) whereby the knife blades (36) are staggered in the longitudinal direction of the shaft (23) in different cutting planes.

13. Kitchen appliance according to one of the claims 1 to 11, characterized in that the tool to be connected to the shaft (23) is a paddle blade mixer with two oppositely arranged paddle blades.

14. Kitchen appliance according to one of the claims 1 to 11, characterized in that the tool to be connected to the shaft (23) is an emulsion mixer (37) with a central disk (38) and a wire spiral (39) surrounding the disk (38) whereby the total diameter corresponds to the inner dimension of the vessel (11).

15. Kitchen appliance according to one of the claims 1 to 11, characterized in that the tool to be connected to the shaft (23) is a disk-shaped pressure disk with an annular seal arranged about its outer periphery.

16. Kitchen appliance according to one of the claims 1 to 11, characterized in that the tool to be connected to the shaft (23) is a cutting tool having a wire screen (40).

17. Kitchen appliance according to one of the claims 1 to 11, characterized in that the tool to be connected to the shaft (23) is a cleaning tool (41) with two oppositely arranged blades having on their front side and their backside as well as on their free ends rubber lamellas.

18. Kitchen appliance according to one of the claims 1 to 17, characterized in that the vessel (11), the drive unit (12), and the advancing unit (13) are arranged in a common housing (10).

## Revendications

1. Appareil ménager pour travailler et transformer des aliments en hachant, mélangeant, remuant, pétrissant, pressant ou similaire, ou pour la fabrication d'émulsions à base d'aliments par l'intermédiaire d'un outil (24) de travail et/ou de transformation, entraîné par un moteur (25) et par l'intermédiaire d'un espace de travail correspondant, réalisé comme une cuve tubulaire (11) disposée horizontalement, l'outil (24) étant guidé en tournant sur la longueur de la cuve (11) au moyen d'une unité d'avance (13) sur un arbre (23) disposé dans la direction longitudinale de la cuve (11), et son diamètre correspondant à la dimension intérieure correspondante de la cuve (11), caractérisé en ce qu'en tant qu'unité d'avance (13) on prévoit un chariot (26), entraîné par un moteur électrique (28), mobile dans la direction longitudinale de la cuve (11) sur une broche (27) fixe, chariot sur lequel est disposé le moteur d'entraînement (25) de l'arbre (23).

2. Appareil ménager selon la revendication 1, caractérisé en ce que dans la paroi d'extrémité arrière (17) de la cuve (11) est ménagé un passage (29), rendu étanche au moyen d'une garniture (30), pour l'arbre (23), et en ce que l'outil (24) peut être fixé sur la pointe intérieure de l'arbre (23).

3. Appareil ménager selon la revendication 2, caractérisé en ce qu'une suite de plusieurs outils (24), connectés en série, peut être disposée sur l'arbre (23).

4. Appareil ménager selon l'une quelconque des revendications 1 à 3, caractérisé en ce que la paroi d'extrémité avant (18) de la cuve (11) est réalisée comme un entonnoir de remplissage (19).

5. Appareil ménager selon la revendication 4, caractérisé en ce que la paroi d'extrémité avant (18) de la cuve (11) présente un raccord intérieur pour recevoir des disques fonctionnels (31, 32).

6. Appareil ménager selon la revendication 5, caractérisé en ce que le disque fonctionnel est réalisé comme un disque de fermeture (31).

7. Appareil ménager selon la revendication 5, caractérisé en ce que le disque fonctionnel est réalisé comme un disque de tamis (32).

8. Appareil ménager selon la revendication 5, caractérisé en ce que le disque fonctionnel présente au moins une ouverture de modelage.

9. Appareil ménager selon l'une quelconque des revendications 4 à 8, caractérisé en ce que la paroi d'extrémité avant (18) présente une vis d'évacuation (33).

10. Appareil ménager selon l'une quelconque des revendications 1 à 9, caractérisé en ce que la paroi de la cuve (11) est réalisée sur la longueur de celle-ci dans sa partie supérieure comme un clapet pivotant (20) qui peut être fermé hermétiquement au moyen d'une garniture (21) et d'une fermeture (22).

11. Appareil ménager selon l'une quelconque des revendications 1 à 10, caractérisé en ce que la paroi de la cuve (11) est munie d'un dispositif de refroidissement (34).

12. Appareil ménager selon l'une quelconque des revendications 1 à 11, caractérisé en ce que l'outil (24) à placer sur l'arbre (23) est réalisé comme un couteau (35) avec plusieurs pales de couteau (36), dont les pales de couteau (36), décalées dans la direction longitudinale de l'arbre (23), sont situées à différents niveaux de coupe.

13. Appareil ménager selon l'une quelconque des revendications 1 à 11, caractérisé en ce que l'outil à placer sur l'arbre (23) est réalisé comme un mélangeur à pales avec deux pales situées l'une en face de l'autre.

14. Appareil ménager selon l'une quelconque des revendications 1 à 11, caractérisé en ce que l'outil à placer sur l'arbre (23) est réalisé comme un mélangeur d'émulsion (37) avec un disque central (38) et une spirale en fil métallique (39) entourant le disque (38), spirale dont le diamètre total correspond à la dimension intérieure de la cuve (11).

15. Appareil ménager selon l'une quelconque des revendications 1 à 11, caractérisé en ce que l'outil à placer sur l'arbre (23) est réalisé comme une plaque de pression en forme de disque avec une garniture annulaire disposée sur la circonférence extérieure.

16. Appareil ménager selon l'une quelconque des revendications 1 à 11, caractérisé en ce que l'outil à placer sur l'arbre (23) est réalisé comme un outil de coupe avec une grille métallique (40).

17. Appareil ménager selon l'une quelconque des revendications 1 à 11, caractérisé en ce que l'outil à placer sur l'arbre (23) est réalisé comme un outil de nettoyage (41) avec deux pales situées l'une en face de l'autre, les pales étant recouvertes de lamelles de caoutchouc sur leurs côtés avant et arrière, ainsi que sur les extrémités de pales.

18. Appareil ménager selon l'une quelconque des revendications 1 à 17, caractérisé en ce que la cuve (11), l'unité moteur (12) et l'unité d'avance (13) sont disposées dans un boîtier commun (10).
